# FASCICULE DE BREVET EUROPEEN

(11) **EP 4 248 066 B1**
(45) Date de publication et mention de la délivrance du brevet: **19.08.2026**
(21) Numéro de dépôt: 21823635.4
(22) Date de dépôt: 15.11.2021
(51) Int. Cl.: F01D 5/14, F01D 5/28, F01D 25/16, B29C 70/00, B29C 70/48, B29D 99/00, B29B 11/16, B29L 31/08

(54) **AUBE COMPOSITE POUR UNE TURBOMACHINE D'AÉRONEF ET SON PROCÉDÉ DE FABRICATION**
VERBUNDSCHAUFEL FÜR EINE FLUGZEUGTURBOMASCHINE UND VERFAHREN ZUR HERSTELLUNG DAVON
COMPOSITE BLADE FOR AN AIRCRAFT TURBOMACHINE AND METHOD FOR THE MANUFACTURE THEREOF

(30) Priorité: 23.11.2020 FR 2011994
(43) Date de publication de la demande: 27.09.2023
(73) Titulaire: SAFRAN AIRCRAFT ENGINES, 75015 Paris (FR)
(72) Inventeur: DE CARNE-CARNAVALET, Vincent Marie Jacques Rémi, 77550 MOISSY-CRAMAYEL (FR); ANTON, Pierre Grégoire, 77550 MOISSY-CRAMAYEL (FR); IGLESIAS CANO, Celia, 77550 MOISSY-CRAMAYEL (FR)
(74) Mandataire: Gevers & Orès
(86) Numéro de dépôt international: PCT/FR2021/052006
(87) Numéro de publication internationale: WO 2022/106774

(56) Documents cités:
- EP-A1- 2 843 192
- FR-A1- 3 012 515
- FR-A1- 3 049 002
- FR-A1- 3 076 851
- US-A- 4 298 417
- US-A1- 2010 144 227

## Description

### Domaine technique de l'invention

La présente invention concerne une aube en matériau composite pour une turbomachine d'aéronef, ainsi qu'un procédé de fabrication de cette aube.

### Arrière-plan technique

L'état de la technique comprend notamment les documents FR-A1-2 956 057, FR-A1-3 029 134, FR-A1-3 049 002, FR-A1-3 076 851, EP-A1-2 843 192, FR-A1-3 012 515 et FR-A1-3 051 386.

Le document US-A-4 298 417 divulgue une pale de rotor d'hélicoptère en plastique renforcé, fabriquée en une seule opération de moulage, comprenant un longeron avant en fibres de verre et un tube de torsion.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.* Il s'agit d'un procédé de réalisation d'une pièce en matériau composite à base de fibres tissées et de résine. Un tel procédé est par exemple utilisé pour fabriquer une aube de turbomachine. Les fibres tissées peuvent se présenter sous la forme de plis ou couches qui sont drapé(e)s les un(e)s sur les autres, ou peuvent se présenter sous la forme d'une préforme obtenue par tissage de fibres en trois dimensions. La présente invention concerne plus particulièrement la fabrication d'une aube à partir d'une telle préforme.

La préforme fibreuse ainsi obtenue est placée dans un moule de thermocompression. Dans le cas où les fibres tissées ne sont pas préalablement imprégnées de résine, une résine est injectée dans ce moule. Cette préforme est ensuite chauffée pour que la résine polymérise et forme la pièce finale, par exemple une pale d'aube. Cette pale comporte un intrados et un extrados qui s'étendent depuis un bord d'attaque jusqu'à un bord de fuite de la pale.

Le matériau composite de la pale est relativement fragile, et en particulier sensible aux chocs, et il est connu de le protéger au moyen d'un bouclier métallique qui est rapporté et fixé sur le bord d'attaque de la pale. Ce bouclier peut être collé après polymérisation de la résine ou co-injecté dans le moule au moment où la préforme fait son cycle de polymérisation. Il permet de protéger le bord d'attaque de l'érosion mais également d'améliorer la solidité de l'aube face aux ingestions (grêle, gravillons, débris, oiseaux, etc.).

La préforme tissée en trois dimensions est conçue avec des zones mortes autour des bords pour s'assurer d'avoir, suite à l'élimination de ces zones mortes, les spécifications mécaniques et spatiales requises. La préforme est donc tissée plus large que nécessaire puis découpée au jet d'eau et corrigée finalement à la main lors d'une opération d'ajustage (ou « *trimming »* en anglais) afin d'avoir la forme finale et enlever les fibres effilochées ainsi que les excédents.

Malgré cette découpe et cet ajustage, le taux volumique de fibres et leur décadrage aux extrémités restent difficile à maîtriser, ce qui peut entrainer la présence de zones situées au niveau des bords d'attaque et de fuite dont le taux volumique de fibres n'est pas conforme à la spécification et dont les propriétés mécaniques sont alors impactées.

Au niveau du bord d'attaque, il s'agit d'une problématique mineure, puisqu'un bouclier métallique est ajouté comme expliqué précédemment et vient ainsi renforcer mécaniquement le bord d'attaque. Le tissage peut alors être réalisé selon la forme finale du bord d'attaque (« *net shape »* en anglais). Pour résoudre le problème au niveau du bord de fuite, il est connu de prévoir une préforme fibreuse configurée pour comprendre un bord de fuite plus long en sortie de moule, c'est-à-dire un bord de fuite comprenant une excroissance (usuellement une extrapolation à épaisseur constante à partir d'une certaine position). Cette excroissance comprenant le taux volumique de fibres défaillant est ensuite usinée pour être retirée.

Bien que cette pratique permette d'obtenir un bord de fuite présentant le taux volumique de fibres souhaité, cela aboutit à un bord de fuite à bords saillants de forme « carrée ». Or, un bord de fuite carré dégrade les propriétés aérodynamiques car il peut s'y produire des zones de recirculation, appelées notamment pertes de culot. Il est en effet préférable d'un point de vue performance d'avoir des bords de fuite arrondis ou ronds comme c'est le cas dans une fabrication métallique classique. Ce delta de performance aérodynamique réduit l'intérêt du gain de masse de l'aube en matériau composite par rapport à l'aube en alliage métallique.

Le bord de fuite de la pièce en composite peut alors être usiné une seconde fois afin de passer d'un bord de fuite carré à un bord de fuite rond par retrait de matière, mais ce procédé ajoute une étape supplémentaire dans le procédé de fabrication de l'aube et la difficulté de sa réalisation peut facilement entraîner des non-conformités. Or, à cette étape presque finale de fabrication, une non-conformité provoque des rebuts dont les coûts sont élevés, ce qui augmente le coût moyen des aubes.

En outre, cela impose des contraintes géométriques sur le bord de fuite. En effet, dans le but de réaliser l'opération d'usinage en une seule passe, une fraise de forme unique doit être utilisée, ce qui entraine une épaisseur constante du bord de fuite sur toute la hauteur de la pale et de forme pas trop vrillée (ou pas trop en trois dimensions). Une alternative serait de réaliser cette étape d'usinage en plusieurs passes et avec plusieurs fraises, mais cela rend l'opération d'usinage nettement plus complexe et coûteuse.

Par ailleurs, il est difficile d'effectuer un tel usinage (simple ou complexe) après disposition d'un éventuel film polyuréthane de protection à l'érosion et/ou un éventuel film permettant d'appliquer un traitement de surface sur l'aube. En outre, dans le cas d'un usinage complexe, c'est-à-dire sans fraise de forme unique (bord de fuite à épaisseur variable et/ou forme complexe), on a un risque d'encrassement de l'outil d'usinage par le film polyuréthane.

Enfin, il y aura une potentielle non-adéquation de l'étape d'usinage à des bords de fuite très fins permettant de meilleures performances (l'usinage d'une géométrie fine peut en effet être complexe).

La présente invention a notamment pour but de résoudre tout ou partie des problèmes précités.

### Résumé de l'invention

L'invention propose à cet effet une aube composite pour une turbomachine, en particulier d'aéronef, cette aube comportant une pale comportant un intrados et un extrados reliés ensemble par un bord d'attaque et par un bord de fuite, la pale étant formée à partir d'une préforme fibreuse obtenue par tissage de fibres en trois dimensions qui est noyée dans une matrice polymérique, l'aube comportant un premier bouclier métallique s'étendant sur et le long du bord d'attaque de la pale, l'aube comprenant en outre au moins un élément de recouvrement s'étendant sur et le long du bord de fuite de la pale, dans laquelle l'élément de recouvrement est en matériau composite thermoplastique et comprend au moins un tissu en fibres qui est drapé sur au moins une partie de l'intrados et de l'extrados et qui s'étend sur et le long du bord de fuite et du bord d'attaque de la pale, ce tissu étant intercalé entre le premier bouclier et le bord d'attaque et comportant des fibres différentes des fibres de la préforme.

L'élément de recouvrement s'étendant au niveau du bord de fuite peut recouvrir et contenir les fibres libres/effilochées au bord de fuite présentant un taux volumique de fibres inférieur et ainsi obtenir des propriétés mécaniques requises et un aspect ésthétique plus satisfaisant. L'invention permet en outre d'obtenir un bord de fuite arrondi et en particulier de forme complexe, optimisant ainsi les performances de l'aube. Par ailleurs, le bord de fuite est obtenu dans sa géométrie finale directement en sortie de moule, ce qui évite une étape supplémentaire consistant à usiner la matière composite et évite ainsi les inconvénients liés à cette étape présentés précédemment, notamment un temps et des coûts supplémentaires ainsi que des contraintes sur la forme finale du bord de fuite.

L'aube selon l'invention peut être une aube statorique ou une aube rotorique.

L'aube selon l'invention peut comprendre une ou plusieurs des caractéristiques ci-dessous, prises isolément les unes avec les autres ou en combinaison les unes avec les autres :
- l'élément de recouvrement comprend un second bouclier métallique s'étendant sur et le long du bord de fuite de la pale, ledit tissu étant intercalé entre le second bouclier et le bord de fuite,
- le second bouclier est réalisé dans un alliage métallique diffèrent de celui du premier bouclier ;
   -- le second bouclier peut être en acier inoxydable ou en alliage cobalt-nickel (du type Inconel^{®}) par exemple ;
   -- le second bouclier est en matériau composite thermoplastique ;
- le tissu est en fibres de verre ;
- le tissu s'étend sur l'intégralité de l'intrados et de l'extrados de la pale ;
- les fibres de la préforme comprennent des fibres de carbone ;
- le tissu comprend deux bords adjacents qui sont situés sous le premier bouclier ou le second bouclier.

La présente invention concerne également un procédé de fabrication d'une aube telle que décrite précédemment.

Selon l'invention, le procédé de fabrication comprend les étapes de :
a) positionnement du premier bouclier et dudit au moins un élément de recouvrement sur une préforme fibreuse de la pale,
b) disposition de l'ensemble ainsi formé dans la cavité d'un moule de compactage,
c) fermeture du moule et compactage de l'ensemble,
d) transfert de l'ensemble dans un moule de polymérisation afin de polymériser la résine qui est injectée dans la cavité de ce moule ou qui est préalablement présente sur les fibres de la préforme, de façon à assurer la solidarisation simultanée du premier bouclier et dudit au moins un élément de recouvrement avec la pale.

L'étape a) du procédé peut comprendre également le positionnement d'un second bouclier sur le bord de fuite de la pale. Ce second bouclier est alors co-injecté. En variante, il pourrait être collé.

L'étape a) du procédé peut comprendre la pulvérisation d'un spray visqueux sur le tissu pour faciliter son adhésion sur la préforme.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube composite de turbomachine d'aéronef ;
[Fig.2] la figure 2 est une vue schématique en perspective d'une variante d'une aube composite de turbomachine d'aéronef ;
[Fig.3] la figure 3 est une vue schématique en coupe d'une pale avec un premier bouclier rapporté au bord d'attaque et un second bouclier rapporté au bord de fuite selon l'invention ;
[Fig.4a-4c] les figures 4a, 4b et 4c sont des vues schématiques en coupe d'une préforme fibreuse non injectée de résine et destinée à former une pale (figure 4a), de cette même préforme entourée d'un tissu en fibres (figure 4b), et de cette même préforme entourée d'un tissu en fibres avec un premier bouclier au bord d'attaque (figure 4c) ; et
[Fig.5] la figure 5 est une vue schématique en coupe d'une préforme fibreuse non injectée de résine, entourée d'un tissu en fibre avec un premier bouclier au bord d'attaque et un second bouclier au bord de fuite selon l'invention.

### Description détaillée de l'invention

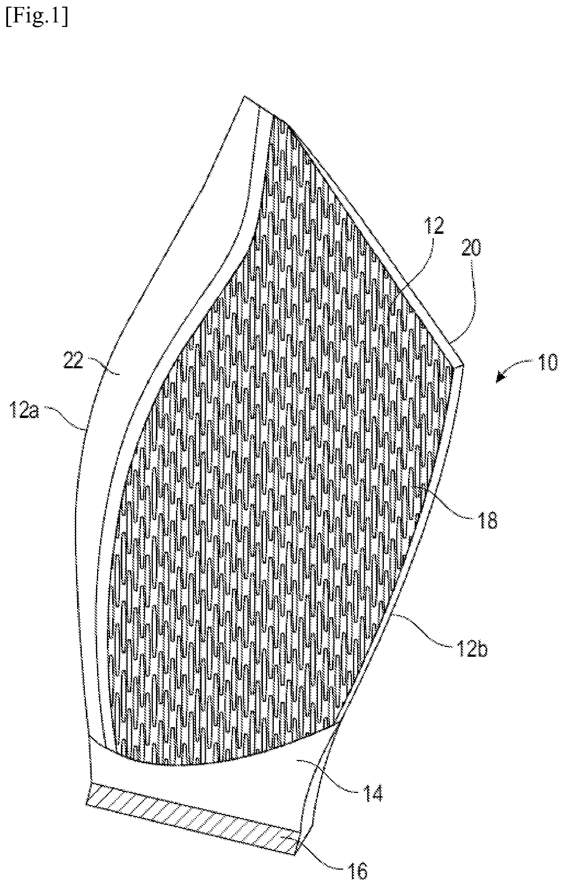

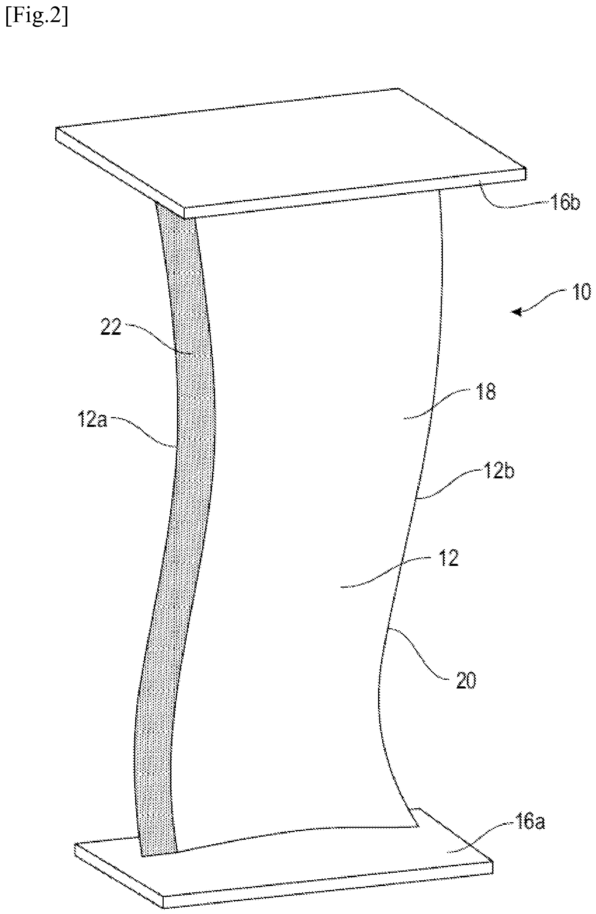

On se réfère d'abord aux figures 1 et 2 qui illustrent des aubes 10 en matériau composite pour une turbomachine d'aéronef, notamment à double flux. L'aube 10 de la figure 1 est une aube 10 mobile (aube rotorique), par exemple d'une soufflante de turbomachine. L'aube 10 de la figure 2 est une aube 10 de redresseur (aube statorique) d'une veine secondaire de la turbomachine, appelée OGV, dont les initiales font référence à l'acronyme anglo-saxon de *Outlet Guide Vane.* Cependant, l'invention est applicable à tout type d'aube composite obtenue à partir d'une préforme tissée en trois dimensions.

Dans le cas de la figure 1, l'aube 10 composite comprend une pale 12, reliée par une échasse 14 à un pied 16, qui a par exemple une forme en queue d'aronde et est conformé pour être engagé dans une alvéole de forme complémentaire d'un disque de rotor, afin de retenir l'aube 10 sur ce disque.

Dans le cas de la figure 2, l'aube 10 composite comprend une pale 12 s'étendant entre deux plateformes 16a, 16b.

La pale 12 de l'aube 10 des figures 1 et 2 comprend un bord d'attaque 12a et un bord de fuite 12b du fluide, par exemple les gaz, qui s'écoule dans la turbomachine. Le bord d'attaque 12a est le bord par lequel le fluide entre en contact en premier avec la pale 12. Le bord de fuite 12b est le bord avec lequel le fluide est en dernier en contact avec la pale 12. La pale 12 a un profil aérodynamique incurvé voire vrillé et comprend un intrados 18 et un extrados 20 s'étendant entre les bords d'attaque 12a et de fuite 12b.

La pale 12 est réalisée à partir d'une préforme fibreuse 2 noyée dans une matrice polymérique et obtenue par tissage en trois dimensions de fibres, par exemple en carbone.

L'aube 10 comprend également un premier bouclier métallique 22 configuré pour renforcer et protéger le bord d'attaque 12a de la pale 12. Le premier bouclier 22 s'étend sur et le long du bord d'attaque 12a de la pale 12. Le premier bouclier 22 est par exemple en titane ou en alliage à base de nickel et de cobalt. Le premier bouclier 22 est par exemple fabriqué par électrodéposition qui permet de réaliser des géométries plus complexes. Le choix entre le titane ou l'alliage à base de nickel et de cobalt se fait notamment selon le rôle de l'aube 10. Dans le cas d'une aube 10 rotorique, le titane peut être privilégié. Au contraire, dans le cas d'une aube 10 statorique, l'alliage à base de nickel et de cobalt peut être privilégié.

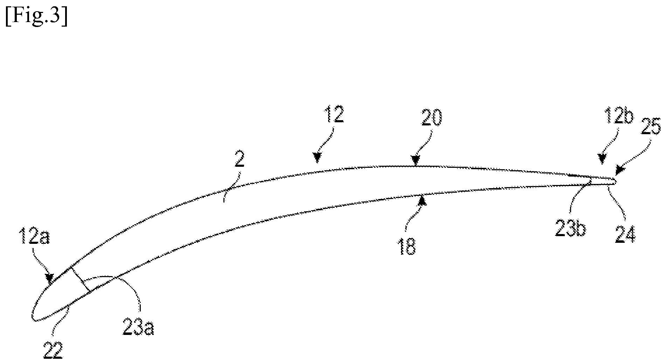

L'invention propose de rajouter sur la pale 12 au moins un élément de recouvrement 25 s'étendant sur et le long du bord de fuite 12b, comme représenté sur les figures 3 à 5.

Selon un premier mode de réalisation l'élément de recouvrement 25 comprend, par exemple, un second bouclier 24 s'étendant sur et le long du bord de fuite 12b de la pale 12, tel que représenté sur la figure 3. Ce second bouclier 24 présente des géométries moins complexes et des exigences mécaniques moins importantes que le premier bouclier 22 du bord d'attaque 12a. En effet, le bord de fuite 12b n'est pas situé sur le chemin d'effort de la pale 12 et subira moins de contraintes mécaniques en fonctionnement. Cet avantage permet de réaliser le second bouclier 24 avec un matériau moins cher, notamment un matériau composite thermoplastique moulé ou encore en alliage métallique, notamment différent de l'alliage utilisé pour le premier bouclier 22. Le second bouclier 24 est par exemple fabriqué dans un alliage métallique tel qu'en acier inoxydable, inconel^{®} (par fabrication additive par exemple) ou aluminium. Le second bouclier 24 est notamment fabriqué par électrodéposition. En outre, pour un bord de fuite 12b relativement droit, il est par exemple possible de fabriquer le second bouclier 24 par pliage d'une tôle métallique, notamment en acier, inconel^{®} ou aluminium, le procédé de pliage de tôle métallique étant moins onéreux que le procédé d'électrodéposition. Alternativement, il est possible d'utiliser, pour le second bouclier 24, le même matériau que pour le premier bouclier métallique 22, notamment si une meilleure tenue mécanique est recherchée.

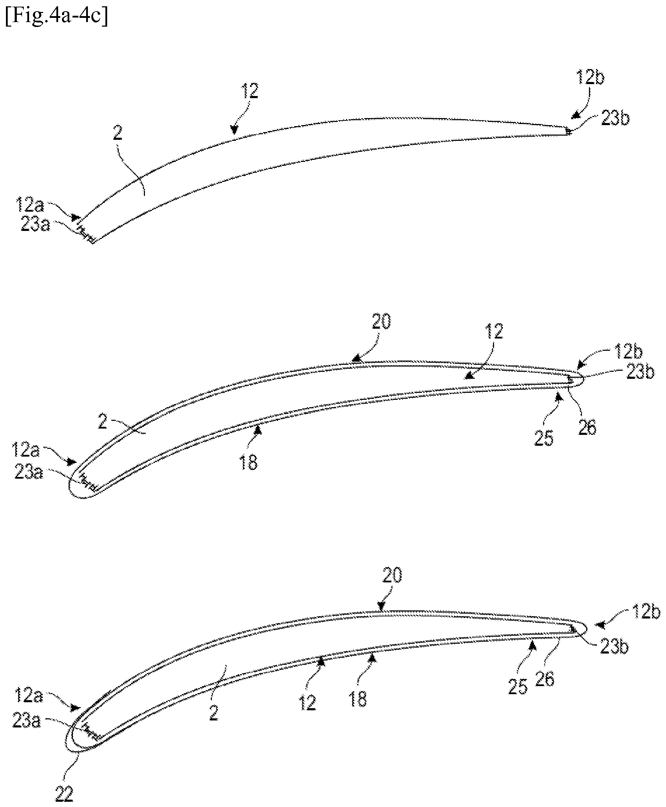

Selon un second mode de réalisation, l'élément de recouvrement 25 comprend, par exemple au moins un tissu en fibres 26 tel que représenté sur les figures 4b et 4c, qui est drapé sur le bord de fuite 12b, depuis au moins une partie de l'intrados 18 jusqu'à au moins une partie de l'extrados 20 et s'étend par exemple sur l'intégralité de l'intrados 18 et de l'extrados 20 de la pale 12. Dans ce dernier cas, le tissu 26 entoure alors complètement la préforme fibreuse 2. Les fibres de ce tissu 26 sont par exemple différentes des fibres de la préforme 2, et sont notamment en fibres de verre.

Le tissu en fibres 26 est par exemple sec. Il est alors parfois nécessaire de rajouter un spray visqueux (*tackifier*) sur le tissu en fibres 26 pour faciliter l'adhésion de ce dernier à la préforme fibreuse 2.

Pour obtenir une aube selon ce mode de réalisation, une forme fibreuse, non injectée de résine, est en particulier tissée puis coupée afin d'obtenir la préforme fibreuse 2, comme représentée sur la figure 4a. Les extrémités libres de cette préforme 2, qui formeront les bords d'attaque 12a et de fuite 12b de la pale 12, présentent respectivement des zones 23a, 23b généralement effilochées dont le taux volumique de fibres est plus faible que celui du restant de la préforme 2. Cette préforme 2 est alors entourée d'un tissu en fibres 26, comme représenté sur la figure 4b, permettant de contenir les fibres effilochées de la zone effilochée 23b du bord de fuite 12b et par exemple de la zone effilochée 23a du bord d'attaque 12a, notamment de manière à renforcer ces zones 23a, 23b. On place ensuite le premier bouclier métallique 22 sur et le long du bord d'attaque 12a, comme représenté sur la figure 4c. Le tissu 26, recouvrant le bord d'attaque 12a de la pale 12, est alors intercalé entre le bord d'attaque 12a et le premier bouclier 22. L'étape suivante est de placer l'ensemble dans un moule de thermocompression pour que la résine soit injectée et que l'ensemble soit chauffé afin d'obtenir la pièce finale.

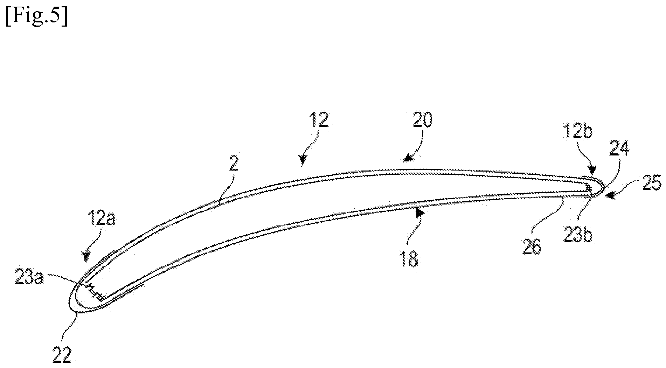

Selon un troisième mode de réalisation, l'élément de recouvrement comprend par exemple au moins ledit second bouclier 24 sur le bord de fuite 12b de la pale 12 et au moins ledit tissu 26, comme représenté sur la figure 5. Ce tissu 26 est alors intercalé entre le bord de fuite 12b et le second bouclier 24.

La pale 12 de ce mode de réalisation est réalisée de manière similaire à celle du second mode à l'exception du fait que le second bouclier 24 est ajouté sur et le long du bord de fuite 12b, par exemple juste avant ou juste après l'ajout du premier bouclier 22 sur et le long du bord d'attaque 12a. Le tissu 26, recouvrant le bord d'attaque 12a de la pale 12, est alors intercalé entre le bord d'attaque 12a et le premier bouclier 22 et entre le bord de fuite 12b et le second bouclier. Ainsi, plusieurs dispositions du tissu en fibres 26 sur la pale 12 sont possibles notamment en fonction du mode de réalisation choisi, et en particulier les suivantes :
- Le tissu en fibres 26 n'entoure pas complètement la pale 12. Dans ce cas, le tissu en fibres 26 commence notamment sur une portion arrière de l'extrados 20, passe autour du bord de fuite 12b et se termine de préférence sur une portion arrière de l'intrados 18.
- Le tissu en fibres 26 entoure complètement la pale 12 et il n'y a que le premier bouclier 22 sur le bord d'attaque 12a (c'est-à-dire qu'il n'y a pas de second bouclier 24 sur le bord de fuite 12b). Dans ce cas, les deux extrémités du tissu en fibres 26 se trouvent en particulier sous le premier bouclier 22.
- Le tissu en fibres 26 entoure complètement la pale 12 et le premier bouclier 22 ainsi que le second bouclier 24 sont présents. Dans ce cas, les deux extrémités du tissu en fibres 26 se trouvent notamment sous le second bouclier 24 ou alternativement sous le premier bouclier 22.

Quel que soit le mode de réalisation de l'invention, une fois l'élément de recouvrement 25 et le premier bouclier 22 positionnés, l'étape suivante est de placer l'ensemble dans un moule de thermocompression pour que la résine soit injectée et que l'ensemble soit chauffé afin d'obtenir la pièce finale, c'est-à-dire la pale 12 de l'aube 10, sans effectuer d'étape supplémentaire.

Ainsi, grâce à l'invention, le tissage du bord de fuite 12b peut être réalisé directement selon la forme finale (« *net shape »* en anglais), c'est-à-dire de forme arrondie et éventuellement de forme complexe, évitant ainsi les étapes supplémentaires d'usinage, de découpe par jet d'eau ou encore d'ajustage de l'art antérieur.

L'ajout du tissu 26 autour de la pale 10 offre, en outre d'améliorer les propriétés mécaniques et l'aspect esthétique liés à la contenance des fibres effilochées de la zone effilochée 23b, d'obtenir un bon état de surface bénéfique par rapport à la spécification aérodynamique, notamment au niveau de la rugosité et des ondulations de surface. Également, il améliore les qualités mécaniques en protégeant la pale notamment contre l'érosion et facilite les réparations et le retrait du premier bouclier 22 et du second bouclier 24 lorsque ce dernier est présent, notamment parce que le tissu 26 minimise l'arrachement du composite située en-dessous pendant l'opération de pelage. Pour la même raison, ce tissu 26 peut en outre être facilement changé lorsqu'il est usé, par exemple par l'érosion.

Le tissu 26 peut être co-injecté sur la préforme, c'est-à-dire que le raccord entre le tissu 26 et la pale composite sera réalisé pendant l'injection dans le moule contenant la préforme fibreuse, permettant de réduire le nombre d'opérations de fabrication, notamment la peinture, ce qui permet notamment d'augmenter les cadences de production et de réduire le coût de la pièce.

Les modes de réalisation comprenant le second bouclier 24 présentent également de nombreux avantages. En effet, le second bouclier 24 protège les bords de fuite 12b potentiellement fin des chocs et coups d'outils au cours de la fabrication, montage et réparation de l'aube.

En outre, les propriétés de son matériau lui permettre de ne pas réduire la durée de vie de la pièce ni la tenue aux sollicitations ultimes ainsi que vibratoires.

Le second bouclier 24 peut être collé ou co-injecté sur le bord de fuite 12b, c'est-à-dire que le raccord entre le second bouclier 24 et la pale composite sera réalisé pendant l'injection dans le moule contenant la préforme fibreuse. Cette deuxième solution est préférable car elle permet d'améliorer la géométrie finale de l'aube, avec notamment des transitions très lisses entre composite et second bouclier, tout en réduisant le risque de hors-tolérances de l'opération d'usinage visant à rendre le bord de fuite rond. Le nombre d'opérations de fabrication est également réduit, notamment le ou les usinages, ainsi que le collage et l'autoclave, ce qui permet d'augmenter les cadences de production et de réduire le coût de la pièce. L'élément de recouvrement 25, c'est-à-dire le tissu 26 et/ou le second bouclier 24, permet ainsi de diminuer le nombre de non-conformités constatées dans les procédés de l'art antérieur comprenant l'étape d'usinage pour enlever l'excroissance du bord de fuite et éventuellement l'étape d'usinage pour arrondir le bord de fuite 12b. La diminution des non conformités permet en particulier de réduire le traitement des dérogations et des rebuts. En outre, lors des productions à faible volumes, les erreurs initiales entrainant des rébus ont un coût important, ce qui accentue l'avantage financier à l'invention.

Ainsi, bien que la solution du second bouclier 24 puisse sembler de prime abord plus coûteuse que celle de l'usinage de l'art antérieur, les avantages soulevés ci-dessus démontrent que le coût moyen de l'aube de l'invention est à l'inverse réduit, notamment dans le cas des productions à faibles volumes.

L'invention concerne également un procédé de fabrication d'une aube 10 telle que décrite précédemment. Un tel procédé comprend les étapes de :
a) positionnement du premier bouclier 22 et dudit au moins un élément de recouvrement 25 sur la préforme fibreuse 2 de la pale 12,
b) disposition de l'ensemble ainsi formé dans la cavité d'un moule de compactage,
c) fermeture du moule et compactage de l'ensemble, et
d) transfert de l'ensemble dans un moule de polymérisation afin de polymériser la résine. La résine est soit préalablement présente sur les fibres de la préforme 2 de façon à assurer la solidarisation simultanée du premier bouclier 22 et dudit au moins un élément de recouvrement 25 avec la pale 12, sinon elle est injectée directement dans la cavité du moule de compactage.

Dans les deux cas, cela permet à l'élément de recouvrement 25 d'être co-injecté avec la préforme fibreuse 2 et entraine les avantages mentionnés précédemment.

## Revendications

1. Aube composite (10) pour une turbomachine, en particulier d'aéronef, cette aube (10) comportant une pale (12) comportant un intrados (18) et un extrados (20) reliés ensemble par un bord d'attaque (12a) et par un bord de fuite (12b), la pale (12) étant formée à partir d'une préforme fibreuse (2) obtenue par tissage de fibres en trois dimensions qui est noyée dans une matrice polymérique, l'aube (10) comportant un premier bouclier métallique (22) s'étendant sur et le long du bord d'attaque (12a) de la pale (12), l'aube comprenant en outre au moins un élément de recouvrement (25) s'étendant sur et le long du bord de fuite (12b) de la pale (12), dans laquelle l'élément de recouvrement (25) est en matériau composite thermoplastique et comprend au moins un tissu en fibres (26) qui est drapé sur au moins une partie de l'intrados (18) et de l'extrados (20) et qui s'étend sur et le long du bord de fuite (12b) et du bord d'attaque (12a) de la pale, ce tissu (26) étant intercalé entre le premier bouclier (22) et le bord d'attaque (12a) et comportant des fibres différentes des fibres de la préforme (2).

2. Aube (10) selon la revendication 1, dans laquelle l'élément de recouvrement (25) comprend en outre un second bouclier (24) métallique s'étendant sur et le long du bord de fuite (12b) de la pale (12), ledit tissu (26) étant intercalé entre le second bouclier (24) et le bord de fuite (12b).

3. Aube (10) selon la revendication 2, dans laquelle le second bouclier (24) est réalisé dans un alliage métallique différent de celui dudit premier bouclier (22).

4. Aube (10) selon l'une des revendications précédentes, dans laquelle le tissu (26) est en fibres de verre.

5. Aube (10) selon l'une des revendications précédentes, dans laquelle le tissu (26) s'étend sur l'intégralité de l'intrados (18) et de l'extrados (20) de la pale (12).

6. Aube (10) selon l'une des revendications précédentes, dans laquelle les fibres de la préforme (2) comprennent des fibres de carbone.

7. Aube (10) selon l'une des revendications précédentes, dans laquelle le tissu (26) comprend deux bords adjacents qui sont situés sous le premier bouclier (22) ou le second bouclier (24).

8. Procédé de fabrication d'une aube (10) selon l'une des revendications précédentes, **caractérisé en ce qu'**il comprend les étapes de :
a) positionnement du premier bouclier (22) et dudit au moins un élément de recouvrement (25), et en particulier dudit tissu, sur une préforme fibreuse (2) de la pale (12),
b) disposition de l'ensemble ainsi formé dans la cavité d'un moule de compactage, et
c) fermeture du moule et compactage de l'ensemble,
d) transfert de l'ensemble dans un moule de polymérisation afin de polymériser la résine qui est injectée dans la cavité de ce moule ou qui est préalablement présente sur les fibres de la préforme (2), de façon à assurer la solidarisation simultanée du premier bouclier (22) et dudit au moins un élément de recouvrement (25) avec la pale (12).

9. Procédé selon la revendication précédente, dans lequel, l'aube (10) étant telle que définie à la revendication 2, l'étape a) comprend également le positionnement d'un second bouclier (24) sur le bord de fuite (12b) de la pale.

10. Procédé selon la revendication 8 ou 9, dans lequel l'étape a) comprend la pulvérisation d'un spray visqueux sur le tissu (26) pour faciliter son adhésion sur la préforme (2).

## Patentansprüche

1. Verbundschaufel (10) für ein Turbotriebwerk, insbesondere eines Luftfahrzeugs, wobei diese Schaufel (10) ein Schaufelblatt (12) beinhaltet, das eine Druckseite (18) und eine Saugseite (20) beinhaltet, die durch eine Vorderkante (12a) und eine Hinterkante (12b) miteinander verbunden sind, wobei das Schaufelblatt (12) aus einer faserigen Vorform (2) gebildet sind, die durch Weben von Fasern in drei Dimensionen erhalten wird, die in eine Polymermatrix getränkt ist, wobei die Schaufel (10) einen ersten Metallschild (22) beinhaltet, der sich auf und entlang der Vorderkante (12a) des Schaufelblatts (12) erstreckt, wobei die Schaufel weiter mindestens ein Abdeckelement (25) umfasst, das sich auf und entlang der Hinterkante (12b) des Schaufelblatts (12) erstreckt, wobei das Abdeckelement (25) aus einem thermoplastischen Verbundwerkstoff ist und mindestens ein Gewebe aus Fasern (26) umfasst, das auf mindestens einen Teil der Druckseite (18) und der Saugseite (20) drapiert ist, und das sich auf und entlang der Hinterkante (12b) und der Vorderkante (12a) des Schaufelblatts erstreckt, wobei dieses Gewebe (26) zwischen dem ersten Schild (22) und der Vorderkante (12a) eingefügt ist und andere Fasern als jene der Vorform (2) beinhaltet.

2. Schaufel (10) nach Anspruch 1, wobei das Abdeckelement (25) weiter einen zweiten Metallschild (24) umfasst, der sich auf und entlang der Hinterkante (12b) des Schaufelblatts (12) erstreckt, wobei das Gewebe (26) zwischen dem zweiten Schild (24) und der Hinterkante (12b) eingefügt ist.

3. Schaufel (10) nach Anspruch 2, wobei der zweite Schild (24) aus einer Metalllegierung verwirklicht ist, die sich von jener des ersten Schildes (22) unterscheidet.

4. Schaufel (10) nach einem der vorstehenden Ansprüche, wobei das Gewebe (26) aus Glasfaser ist.

5. Schaufel (10) nach einem der vorstehenden Ansprüche, wobei sich das Gewebe (26) über die gesamte Druckseite (18) und Saugseite (20) des Schaufelblatts (12) erstreckt.

6. Schaufel (10) nach einem der vorstehenden Ansprüche, wobei die Fasern der Vorform (2) Kohlefasern umfassen.

7. Schaufel (10) nach einem der vorstehenden Ansprüche, wobei das Gewebe (26) zwei benachbarte Ränder umfasst, die sich unter dem ersten Schild (22) oder dem zweiten Schild (24) befinden.

8. Verfahren zur Herstellung einer Schaufel (10) nach einem der vorstehenden Ansprüche, **dadurch gekennzeichnet, dass** es die Schritte umfasst zum:
a) Positionieren des ersten Schildes (22) und des mindestens einen Abdeckelements (25), und insbesondere des Gewebes auf einer faserigen Vorform (2) des Schaufelblatts (12),
b) Anordnen der so gebildeten Anordnung im Hohlraum einer Pressform, und
c) Schließen der Pressform der Anordnung,
d) Übertragen der Anordnung in eine Polymerisationsform, um das Harz zu polymerisieren, das in den Hohlraum dieser Form injiziert wird, oder das vorab auf den Fasern der Vorform (2) vorhanden ist, um für eine gleichzeitige feste Verbindung des ersten Schildes (22) und des mindestens einen Abdeckelements (25) mit dem Schaufelblatt (12) zu sorgen.

9. Verfahren nach dem vorstehenden Anspruch, wobei das Schaufelblatt (10) wie in Anspruch 2 definiert ist, der Schritt a) auch das Positionieren eines zweiten Schildes (24) an der Hinterkante (12b) des Schaufelblatts umfasst.

10. Verfahren nach Anspruch 8 oder 9, wobei der Schritt a) das Zerstäuben eines zähflüssigen Sprays auf dem Gewebe (26) umfasst, um dessen Anhaftung auf der Vorform (2) zu erleichtern.

## Claims

1. A composite vane (10) for a turbomachine, in particular for an aircraft, this vane (10) comprising a blade (12) comprising a pressure side (18) and a suction side (20) connected together by a leading edge (12a) and by a trailing edge (12b), the blade (12) being formed from a fibrous preform (2) obtained by weaving fibres in three dimensions which is embedded in a polymeric matrix, the vane (10) comprising a first metal shield (22) extending over and along the leading edge (12a) of the blade (12), the vane further comprising at least one covering element (25) extending over and along the trailing edge (12b) of the blade (12), wherein the covering element (25) is made of thermoplastic composite material and comprises at least one fibre fabric (26) which is draped over at least one portion of the pressure side (18) and of the suction side (20) and which extends over and along the trailing edge (12b) and the leading edge (12a) of the blade, this fabric (26) being interposed between the first shield (22) and the leading edge (12a) and comprising fibres different from the fibres of the preform (2).

2. The vane (10) according to claim 1, wherein the covering element (25) further comprises a second metal shield (24) extending over and along the trailing edge (12b) of the blade (12), said fabric (26) being interposed between the second shield (24) and the trailing edge (12b).

3. The vane (10) according to claim 2, wherein the second shield (24) is made of a different metal alloy than that of said first shield (22).

4. The vane (10) according to any of the preceding claims, wherein the fabric (26) is of glass fibres.

5. The vane (10) according to any of the preceding claims, wherein the fabric (26) extends over the entirety of the pressure side (18) and of the suction side (20) of the blade (12).

6. The vane (10) according to any of the preceding claims, wherein the fibres of the preform (2) comprise carbon fibres.

7. The vane (10) according to any of the preceding claims, wherein the fabric (26) comprises two adjacent edges which are located under the first shield (22) or the second shield (24).

8. A method for manufacturing a vane (10) according to one of the preceding claims, **characterised in that** it comprises the steps of:
a) positioning the first shield (22) and said at least one covering element (25), and in particular said fabric, on a fibrous preform (2) of the blade (12),
b) placing the assembly thus formed into the cavity of a compaction mould, and
c) closing the mould and compacting the assembly,
d) transferring the assembly into a polymerisation mould in order to polymerise the resin which is injected into the cavity of this mould or which is previously present on the fibres of the preform (2), so as to ensure the simultaneous securing of the first shield (22) and of said at least one covering element (25) with the blade (12).

9. The method according to the preceding claim, wherein, the vane (10) being as defined in claim 2, the step a) also comprises positioning a second shield (24) on the trailing edge (12b) of the blade.

10. The method according to claim 8 or 9, wherein the step a) comprises spraying a viscous spray onto the fabric (26) to facilitate its adhesion to the preform (2).
